# EUROPEAN PATENT APPLICATION

(11) **EP 4 670 876 A1**
(43) Date of publication of application: **31.12.2025**
(21) Application number: 24185194.8
(22) Date of filing: 28.06.2024
(51) Int. Cl.: B23B 27/14, B23B 29/24

(54) **A TURNING TOOL FOR METAL CUTTING**

(71) Applicant: AB Sandvik Coromant, 811 81 Sandviken (SE)
(72) Inventor: Wikblad, Krister, Sandviken (SE); Löf, Ronnie, Sandviken (SE); Wickström, David, Sandviken (SE)
(74) Representative: Sandvik

(57) **Abstract**

The invention relates to a turning tool (1) comprising a tool body (10) having a plurality of insert seats (94, 95, 95') at a front end (FE) thereof. A mounted first cutting insert (41) has a front point located axially most forward of all points on all cutting edges of the tool. The first cutting edge has a radial point located radially most outward of all points on all cutting edges of the tool. The first cutting insert has a side cutting edge for machining a workpiece (20) in an axial direction thereof and a side cutting edge for machining the workpiece in a radial direction thereof. A second cutting insert (95; 95') is arranged so that a side surface thereof forms a continuation of one of the side cutting edges of the first insert. The first and second insert is in cut simultaneously, in the axial or radial direction. More cutting inserts may be provided in a similar way to achieve a large cutting depth during a pass in the axial or radial direction. The total cutting depth during a pass is the sum of a number of cutting depths (Ap1, Ap2).

## Description

### TECHNICAL FIELD

The invention relates to a turning tool for metal cutting. More specifically the present invention belongs to the field of turning.

### BACKGROUND

Within the field of metal cutting, a turning tool may be used for machining the surface of a rotating workpiece.

A cutting insert, for example made of cemented carbide or some other wear resistant material, is commonly arranged at the front of a turning tool. Cutting inserts may include multiple cutting edges, such that the cutting insert is indexable, i.e., such that different cutting edges can be positioned in active or inactive positions depending on how the cutting insert is mounted in the insert seat. As a cutting edge has been worn down to a certain extent the cutting insert has to be remounted so as to provide another cutting edge for machining of the workpiece. This is a time consuming process.

In some applications it is desirable to remove a rather large volume of the workpiece. If the workpiece consists of a hard metal this is particularly time consuming and expensive. Larger cutting inserts are more expansive to produce and longer cutting edges being in cut generate broader chips, which is undesirable for many reasons.

Instead of having a larger cutting insert other approaches have been suggested wherein longitudinal external turning may be performed by a turning tool having more than one cutting insert cooperating during machining in a longitudinal feed direction. One such turning tool is disclosed in CN107838448A. The turning tool suggested in CN107838448A works in some applications. However, the turning tool is not particularly versatile, but designed for specific applications and feed directions and may not be satisfactory for some applications. Hence, there is a need for an improved turning tool that is versatile. There is also a need for an improved turning tool that is cost-effective, effective in cut and generates manageable chips during machining.

### SUMMARY

It is an object of the present invention to at least partly obviate the above-mentioned problems. This object is achieved according to the invention by means of a turning tool as defined in claim 1.

According to an aspect of the invention there is provided a turning tool comprising a tool body, which
- extends rearward from a front end to a rear end along a longitudinal central axis, which defines an axial direction and a radial direction,
- is provided with a plurality of insert seats, and

a plurality of cutting inserts, which
   - each are arranged in one respective insert seat,
   - each comprise a cutting edge, which cutting edge comprises
      ∘ an axially most forward front point,
      ∘ a radially most outward radial point, and
      ∘ a side cutting edge,
wherein the plurality of cutting inserts comprises:
   - a first cutting insert, which comprises two of the side cutting edges in form of a first axial cutting edge and a first radial cutting edge, wherein,
      ∘ the front point thereof is a first front point located axially most forward of all points on all cutting edges of the tool;
      ∘ the radial point thereof is a first radial point located radially most outward of all points on all cutting edges of the tool;
      ∘ wherein
         ▪ the first axial cutting edge has a main extension in the radially inward direction from a position radially inward of the front point, and
         ▪ the first radial cutting edge has a main extension in an axially rearward direction from a position axially rearward of the radial point,
   - a second cutting insert,
   wherein
the second cutting insert is positioned beside the first cutting insert such that the side cutting edge of the second cutting insert forms a continuation of one of the two side cutting edges of the first cutting insert, wherein
   - when the second cutting insert is positioned such that the side cutting edge forms a continuation of the first axial cutting edge,
      ∘ the front point of the second cutting insert is located axially rearward of the first front point and axially forward of an axial rear end of the first axial cutting edge,
      ∘ the side cutting edge is a second axial cutting edge with a main extension in a radial direction,
   - when the second cutting insert is positioned such that the side cutting edge forms a continuation of the first radial cutting edge,
      ∘ the radial point of the second cutting insert is located radially inward of the first radial point and radially outward of a radial rear end of the first radial cutting edge,
      ∘ the side cutting edge is a second radial cutting edge with a main extension in an axial direction.

Said radial direction is seen in a projection as seen in a top view. The radial direction may be a lateral direction extending from a first end point to a second end point.

Herein, when it is stated that a number of side cutting edges form a continuation of a first side cutting edge, the side cutting edges extend mainly in the lateral direction.

The turning tool is arranged to move in a first feed direction. The first feed direction is parallel, or substantially parallel, to a longitudinal central axis of the metal workpiece. The longitudinal central axis of the metal workpiece is according to an example coinciding with a rotational axis of the workpiece. The turning tool is also arranged to move in a direction opposite to the first feed direction. In some applications at least one cutting insert of the turning tool is arranged to be in active cut in the first feed direction and the feed direction opposite to the first feed direction.

The metal workpiece is arranged to rotate in a rotational direction.

The turning tool is arranged to move in a second feed direction. The second feed direction is perpendicular, or substantially perpendicular, to the longitudinal central axis/rotational axis of the metal workpiece. The turning tool is also arranged to move in a direction opposite to the second feed direction. In some applications at least one cutting insert of the turning tool is arranged to be in active cut in the second feed direction and the feed direction opposite to the second feed direction.

Advantageously a plurality of side cutting edges are in active cut at a respective cutting depth during a pass in the first direction or the second direction. Hereby the total cutting depth of the side cutting edges of the turning tool is made up by the sum of the respective cutting depth of the side cutting edges. Hereby improved chip control is achieved compared to have one large cutting insert with a cutting edge arranged for corresponding total cutting depth. Also, by providing a number of cutting edges cooperating for achieving a relatively big cutting depth a cost effective turning tool is provided.

As disclosed herein the turning tool may be arranged with plurality of cutting inserts for simultaneous cutting in the first feed direction, the second feed direction, or both. Hereby a versatile and cost-effective turning tool is provided.

According to one example the plurality of cutting inserts of the turning tool are substantially identical, i.e. all cutting inserts are of the same sort having substantially identical profile/form/shape.

Advantageously the turning tool may be provided with many different sets of cutting inserts. Hereby a turning tool having a predetermined set of cutting inserts may be selected for a particular application. By providing a turning tool having a certain cutting inserts configuration an optimal machining according to a particular application may be performed. Hereby the inventive turning tool is versatile.

During a pass in a certain feed direction the turning tool may be controlled to achieve different total cutting depths along the pass. Hereby one or more cutting inserts of the cutting tool can move from a position being in active cut to a position not being in active cut, or vice versa.

Said first front point located axially most forward of all points on all cutting edges of the tool may be positioned at a nose cutting edge of the first cutting insert. Said first radial point located radially most outward of all points on all cutting edges of the tool may be positioned at a nose cutting edge of the first cutting insert. Said front point of the second cutting insert, or any of a plurality of second cutting inserts, may be positioned at a nose cutting edge thereof.

According to an example intermediate material of the tool body between the plurality of insert seats is preferably minimized, meaning that the plurality of cutting inserts are positioned relatively close to each other. Hereby less material of the tool body is required, which is a cost-effective design. Also, less space between the cutting inserts of the turning tool beneficially improve the turning operation and maintenance because chips generated during machining is less prone to get caught in this area.

According to an example the turning tool further comprises two of the second cutting inserts, wherein one is positioned such that the side cutting edge forms a continuation of the first axial cutting edge, and one is positioned such that the side cutting edge forms a continuation of the first radial cutting edge.

Hereby machining by means of two cutting inserts being in cut simultaneously is achieved. This can be performed in either the first feed direction or the second feed direction. The tool may thus machine the workpiece at a large cutting depth, which is the sum of the cutting depths of the cutting inserts being in cut, in both the direction of the longitudinal axis of the workpiece and the radial direction of the workpiece. Advantageously a versatile turning tool is provided.

According to an example the turning tool further comprises two of the second cutting inserts, wherein one is positioned such that the side cutting edge forms a continuation of the first axial cutting edge, and one is positioned such that the side cutting edge forms a continuation of that side cutting edge.

Hereby machining by means of three cutting inserts being in cut simultaneously is achieved. This can be performed in the first feed direction. Still, the turning tool is arranged to machine the workpiece in a radial direction thereof by means of the first radial cutting edge of the first cutting insert. The tool may thus machine the workpiece at a large cutting depth, which is the sum of the cutting depths of the cutting inserts being in cut, in the direction of the longitudinal axis of the workpiece and machine the workpiece in the radial direction as well. Advantageously a versatile turning tool is provided. Advantageously the turning tool can machine at a very large cutting depth in the direction of the longitudinal axis of the workpiece.

According to one set of cutting inserts the first cutting insert is a profiling cutting insert. Hereby a high quality surface finish of the machined workpiece may be achieved. The profiling cutting insert may have a wiper cutting edge associated with the first axial cutting edge and/or a wiper cutting edge associated with the first radial cutting edge. An intermediate triangular cutting insert is according to this example positioned between the first cutting insert and a roughing cutting insert. The roughing cutting insert is arranged to cut at a relatively big cutting depth. Also, the roughing cutting insert is well adapted to machine efficiently even though the peripheral surface of the work piece is not smooth. The intermediate triangular cutting insert is robust and generates manageable chips during machining.

In some embodiments the one or more cutting inserts is provided with a wiper edge. As is well-known in the art, a wiper edge, or a wiper segment of a cutting edge, is formed by one or more large radiused curvilinear segments following a nose cutting edge and that "wipes" the surface behind such nose cutting edge, resulting in a better surface finish by smoothing out the scallops in the machined surface.

According to an example the turning tool further comprises three of the second cutting inserts, wherein
one is positioned such that the side cutting edge forms a continuation of the first axial cutting edge, and
one is positioned such that the side cutting edge forms a continuation of that side cutting edge, and
one is positioned such that the side cutting edge forms a continuation of the first radial cutting edge.

Hereby machining by means of three cutting inserts being in cut simultaneously can be performed in the first feed direction. Hereby machining by means of two cutting inserts being in cut simultaneously can be performed in the second feed direction. The tool may thus machine the workpiece at a large cutting depth in the first feed direction and the second feed direction. Advantageously an effective and versatile turning tool is provided. Advantageously cost-effective machining of a workpiece is achieved.

According to an example the turning tool further comprises four of the second cutting inserts, wherein the four cutting inserts are positioned adjacent to the first cutting insert on one side thereof and adjacent to each other such that the side cutting edges thereof together form a continuation of the first axial cutting edge. Hereby a very large cutting depth, which is the sum of up to five individual cutting depths, may be achieved. Advantageously an effective and versatile turning tool is provided. Advantageously cost-effective machining of a workpiece is achieved. Hereby a big total cutting depth may be achieved during machining while having good chip control.

According to an example the turning tool further comprises four of the second cutting inserts, wherein the four cutting inserts are positioned adjacent to the first cutting insert on one side thereof and adjacent to each other such that the side cutting edges thereof together form a continuation of the first radial cutting edge. Hereby a very large cutting depth, which is the sum of up to five individual cutting depths, may be achieved. Advantageously an effective turning tool for machining the metal workpiece in a radial direction thereof. Advantageously an effective and versatile turning tool is provided. Advantageously cost-effective machining of a workpiece is achieved. Hereby a big total cutting depth may be achieved during machining while having good chip control.

According to an example at least the first cutting insert and the second cutting insert have mutually different profiles. Advantageously a turning tool having a unique cutting insert configuration may be selected for a certain application. Each profile of a cutting insert has certain benefits and a preferred set of cooperating cutting inserts may be selected. For example, a set of three, four or five different cutting inserts may be selected for simultaneous machining in a particular feed direction. Various combinations of cooperating cutting inserts may be selected. Herein five different cutting inserts are disclosed. The inventive turning tool is however not limited to use of only these five different cutting inserts but any suitable cutting insert may be used in any desirable position of the set of turning inserts.

According to an example the first axial cutting edge is oriented relative the longitudinal central axis at an angle of 30-80°. Hereby an entering angle of the first cutting insert is 10-60°. Hereby an entering angle of the first axial cutting edge is 10-60°. According to one example the first axial cutting edge is preferably oriented so that it will be in active cut at an entering angle of 15-30°. According to an example a cutting depth of 2.5 mm per insert may be used at this entering angle. According to one example the first axial cutting edge is oriented so that it will be in active cut at an entering angle of 5-15°. According to an example a cutting depth of 4-5 mm per insert may be used at an entering angle of 80-89°.

According to an example the first radial cutting edge is oriented relative the longitudinal central axis at an angle of 10-60°. Hereby an entering angle of the first cutting insert is 10-60°. Hereby an entering angle of the first radial cutting edge is 10-60°. According to one example the first radial cutting edge is preferably oriented so that it will be in active cut at an entering angle of 15-30°. According to an example a cutting depth of 2.5 mm per insert may be used at this entering angle. According to one example the first radial cutting edge is oriented so that it will be in active cut at an entering angle of 5-15°. According to an example a cutting depth of 4-5 mm per insert may be used at an entering angle of 80-89°.

By providing a relatively low entering angle, which is less than 90° improved chip control is achieved. Also, the lifetime of cutting inserts may be increased. Advantageously productivity in terms of machining is increased.

Each cutting insert of the inventive turning tool may be oriented in a predetermined way so that each cutting insert is in active cut at a certain entering angle.

According to one example all side cutting edges of the tool are oriented in such a way that they are providing substantially the same entering angle. According to one example the side cutting edges of the tool are oriented in such a way that they are providing mutually different entering angles.

According to an example, a distance, as seen in the axial direction, between the first front point of the first cutting insert and a front point of an adjacent second cutting insert is 2.0-5.0 mm. Hereby the turning tool is arranged for machining at a cutting depth of 2.0-5.0 mm in the first feed direction.

According to an example, a distance, as seen in the radial direction, between the first radial point of the first cutting insert and a radial point of an adjacent second cutting insert is 2.0-5.0 mm. Hereby the turning tool is arranged for machining at a cutting depth of 2.0-5.0 mm in the second feed direction.

According to an example the second cutting insert is positioned such that the side cutting edge forms a continuation of the first axial cutting edge at a maximum of half the length of the first axial cutting edge measured from the first axial front point, or the second cutting insert is positioned such that the side cutting edge forms a continuation of the first radial cutting edge at a maximum of half the length of the first radial cutting edge measured from the first radial front point.

According to one example at least one of the first and second cutting insert is indexable. According to one example each cutting insert of the turning tool is indexable at least two times. Hereby the lifetime of cutting inserts may be increased.

According to an example the cutting inserts may be made from a wear resistant material, such as cemented carbide. The cutting insert may be non-coated or coated with thin layer of a different material.

In general, regardless how the inserts are arranged with respect to the component/workpiece being machined, the cutting inserts are particularly well suited for operations where varying cutting depths can be expected.

Hence, the cutting inserts as disclosed herein are very versatile and robust and insensitive to varying cutting depths during machining.

The invention also relates to a machining method for metal cutting using a turning tool according to what is depicted herein. Hereby a number of cutting inserts is in active cut simultaneously in an axial direction or a radial direction of the metal workpiece.

According to an embodiment, a computer program having instructions which when executed by the computer numerical control lathe cause the computer numerical control lathe to perform the method. Said computer program comprises preprogrammed sequences of machine control commands which can be executed by a CNC-lathe to perform the machining method according to an embodiment. According to an embodiment, a computer readable medium having stored thereon such a computer program. The computer readable medium, which carries the computer program, may be in the form of any computer readable memory which carries data, such as e.g. a CD-ROM disc. According to an embodiment, a data stream which is representative of such a computer program. Said data stream is a sequence of digitally encoded coherent signals used to transmit information.

A "turning tool" should be understood as a cutting tool used for machining a rotating workpiece. The turning tool is connectable to a machine tool, for example a CNC lathe or other machine tool suitable for turning operations.

### BREIF DESCRIPTION OF THE FIGURES

The present invention will now be explained in more detail by a description of embodiments of the invention and by reference to the accompanying drawings.
Fig. 1a is a perspective view of a turning tool according to an example.
Fig. 1b is a top view of the turning tool in Fig. 1a;
Fig. 2a is a perspective view of a turning tool according to an example;
Fig. 2b is a top view of the turning tool in Fig. 2a;
Fig. 3a is a perspective view of a turning tool according to an example;
Fig. 3b is a top view of the turning tool in Fig. 3a;
Fig. 4a is a perspective view of a turning tool according to an example;
Fig. 4b is a top view of the turning tool in Fig. 4a;
Fig. 5a is a perspective view of a turning tool according to an example;
Fig. 5b is a top view of the turning tool in Fig. 5a;
Fig. 6a-f are diagrams of a number of cutting depths;
Figure 7a-l schematically illustrate a first example of a cutting insert;
Figure 8a-i schematically illustrate a second example of a cutting insert;
Figure 9a-e schematically illustrate a third example of a cutting insert;
Figure 10a-d schematically illustrate a fourth example of a cutting insert; and
Figure 11a-d schematically illustrate a fifth example of a cutting insert.

### DETAILED DESCRIPTION OF THE FIGURES

All the figures are schematic, not necessarily to scale, and generally only show parts which are necessary in order to elucidate the respective embodiments, whereas other parts may be omitted or merely suggested. Unless otherwise indicated, like reference numerals refer to like parts in different figures.

There are five different examples of the turning tool 1 disclosed herein. Each example of the turning tool 1 has a unique set of cutting inserts. It should be noted that many other examples of the inventive turning tool 1, each example having a unique set of cutting inserts, may be realized.

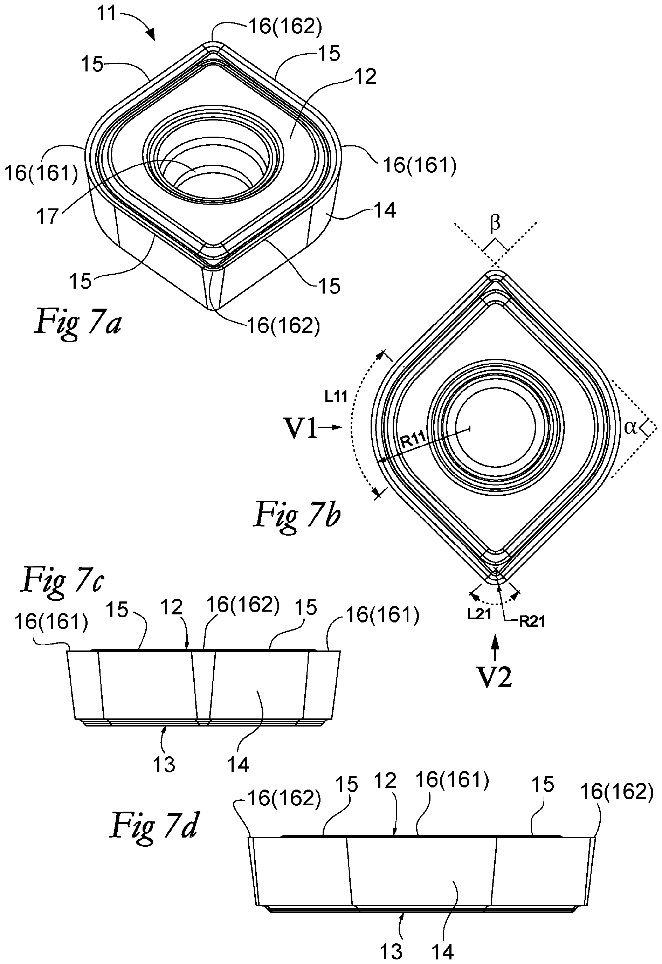

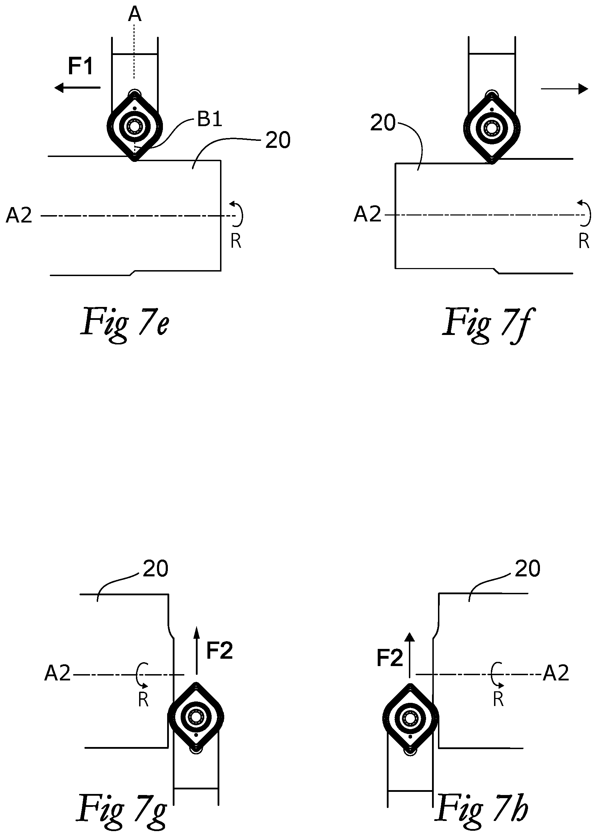

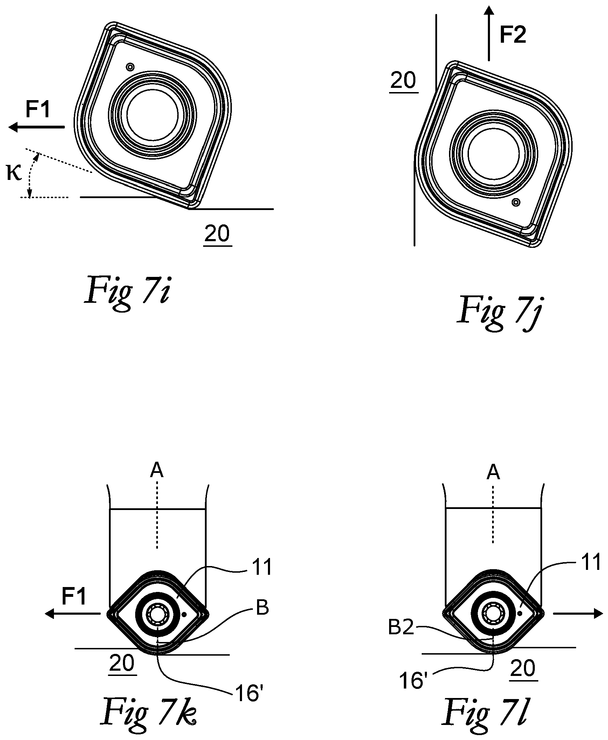

The turning tool 1 comprises a tool body 10. The tool body 10 has a front end FE and an opposite rear end RE. A peripherical surface 9 is connecting the front end FE and the rear end RE. A longitudinal central axis A1 is extending from the front end FE to the rear end RE and is defining an axial direction and a radial direction. A plurality of insert seats are positioned at the front end FE. A cutting insert is arranged in each insert seat. Various examples of cutting inserts are disclosed with reference to Figures 7-11 below.

Herein the term "forward front point FFP" of a cutting insert is used synonymously with "front point FFP".

Herein the term "outward radial point ORP" of a cutting insert is used synonymously with "radial point ORP".

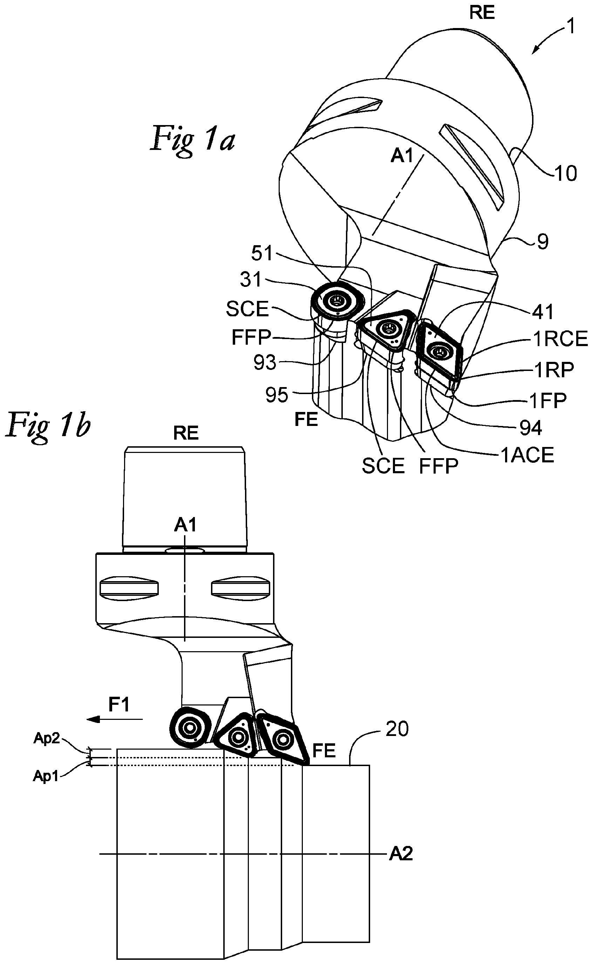

Figures 1a and 1b schematically illustrate a turning tool 1 according to an example.

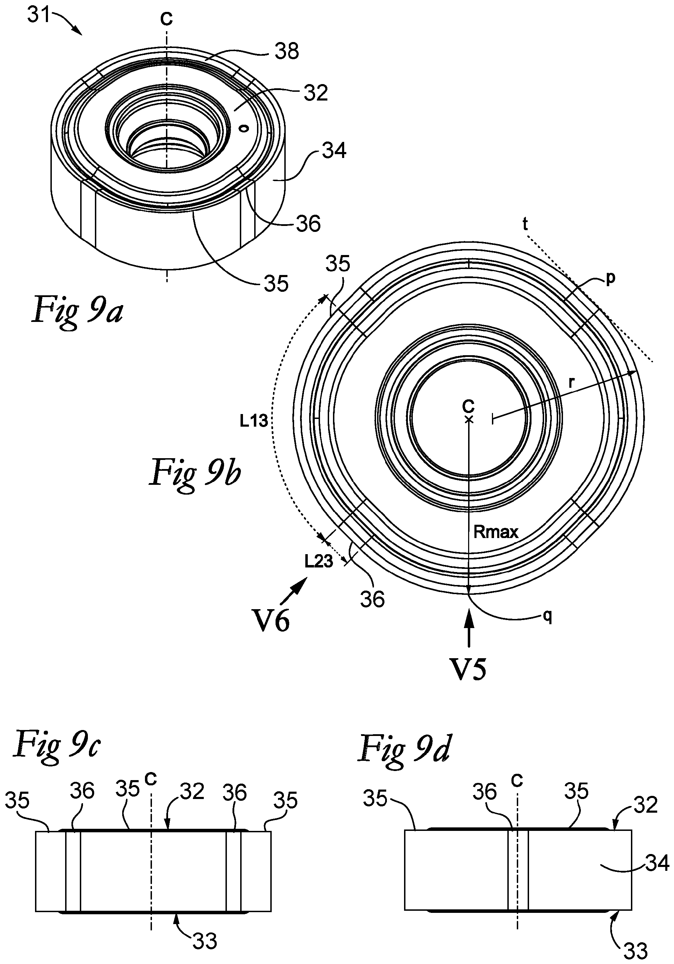

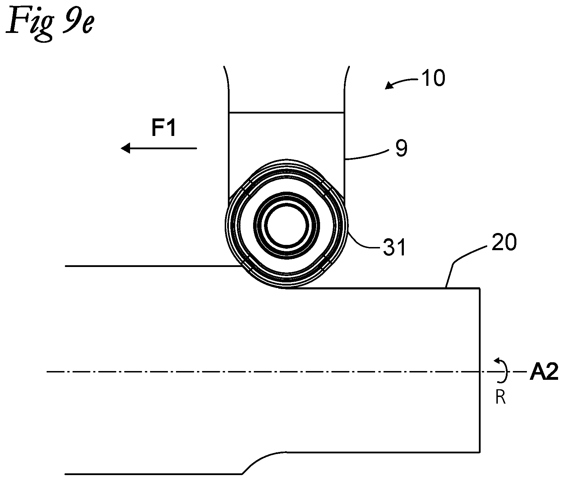

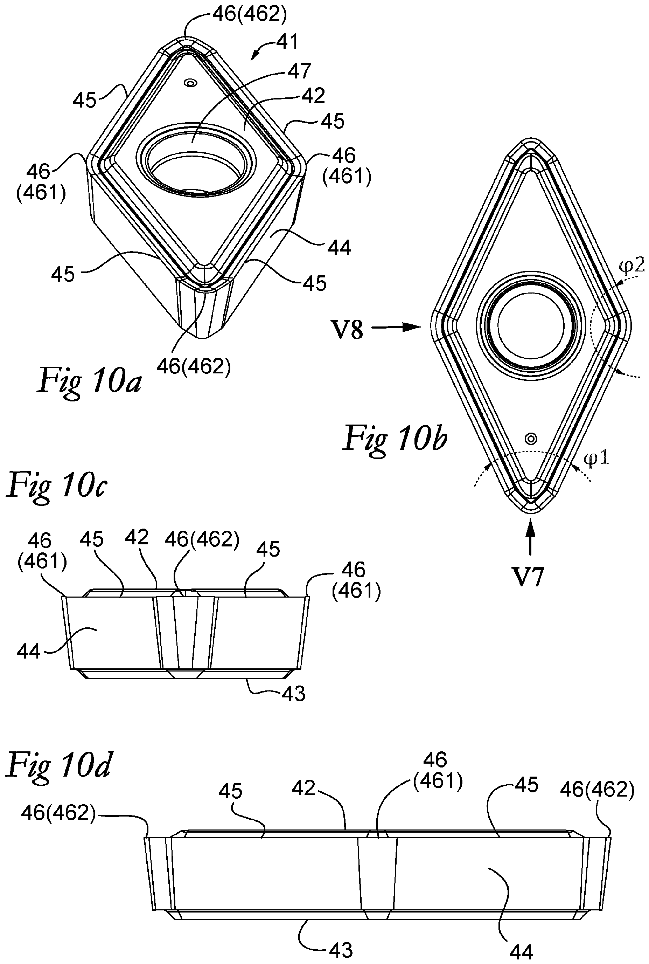

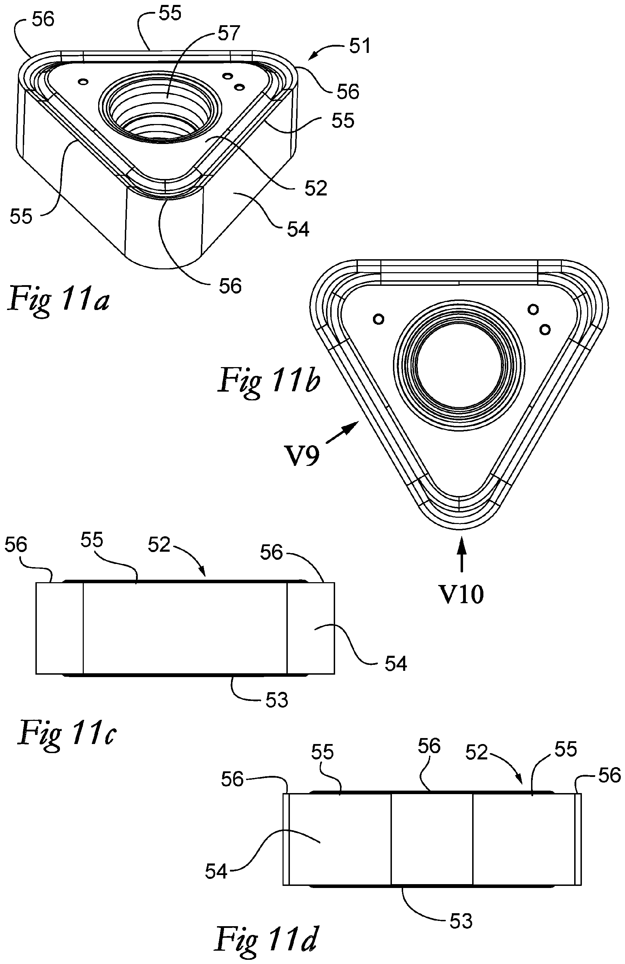

The turning tool 1 comprises a first insert seat 94 for holding a first cutting insert 41. The first cutting insert 41 is depicted in greater detail with reference to Figure 10. The turning tool 1 comprises an insert seat 95 for holding a cutting insert 51. The cutting insert 51 is depicted in greater detail with reference to Figure 11. The turning tool 1 comprises an insert seat 93 for holding a cutting insert 31. The cutting insert 31 is depicted in greater detail with reference to Figure 9. The cutting insert 51 is positioned between the cutting insert 31 and the first cutting insert 41. The cutting inserts of the turning tool 1 according to this example are arranged to be simultaneously in cut in a first feed direction F1. The first feed direction F1 is parallel, or substantially parallel, to a longitudinal central axis A2 of a workpiece 20. The longitudinal central axis is the rotational axis of the workpiece 20.

Each of the cutting inserts of the turning tool 1 comprises a cutting edge, which cutting edge comprises an axially most forward front point, a radially most outward radial point, and a side cutting edge.

The first cutting insert 41 comprises two of the side cutting edges in form of a first axial cutting edge 1ACE and a first radial cutting edge 1RCE. The front point thereof is a first front point 1FP located axially most forward of all points on all cutting edges of the turning tool 1. The radial point thereof is a first radial point 1RP located radially most outward of all points on all cutting edges of the turning tool 1. According to this example the first forward point 1FP and the first radial point 1RP are positioned at the same point.

The first axial cutting edge 1ACE has a main extension in a radially inward direction from a position radially inward of the first front point 1FP.

The first radial cutting edge 1RCE has a main extension in an axially rearward direction from a position axially rearward of the first radial point 1RP. The first radial cutting edge 1RCE is arranged to be in active cut in a second feed direction F2, which is perpendicular to a first feed direction F1. The first feed direction F1 is parallel, or substantially parallel, to the longitudinal central axis A2. The second feed direction F2 is perpendicular, or substantially perpendicular, to the longitudinal central axis A2.

The cutting insert 51 is positioned beside the first cutting insert 41 such that the side cutting edge SCE of the cutting insert 51 forms a continuation of one side cutting edge of the first cutting insert 41, namely the first axial cutting edge 1ACE.

Hereby the forward front point FFP of the cutting insert 51 is located axially rearward of the first front point 1FP and axially forward of an axial rear end of the first axial cutting edge 1ACE. Hereby the side cutting edge is a second axial cutting edge with a main extension in a radial direction.

The cutting insert 31 is positioned such that the side cutting edge SCE thereof forms a continuation of side cutting edge SCE of the cutting insert 51. Hereby the front point FFP of the cutting insert 31 is located axially rearward of the front point FFP of the cutting insert 51 and axially forward of an axial rear end of the side cutting edge of the cutting insert 51. Hereby the side cutting edge is a third axial cutting edge with a main extension in a radial direction.

According to this example three cutting inserts are arranged to be in cut simultaneously during machining of the metal workpiece 20. However, depending on the chosen application one, two or all three cutting inserts may be in active cut simultaneously.

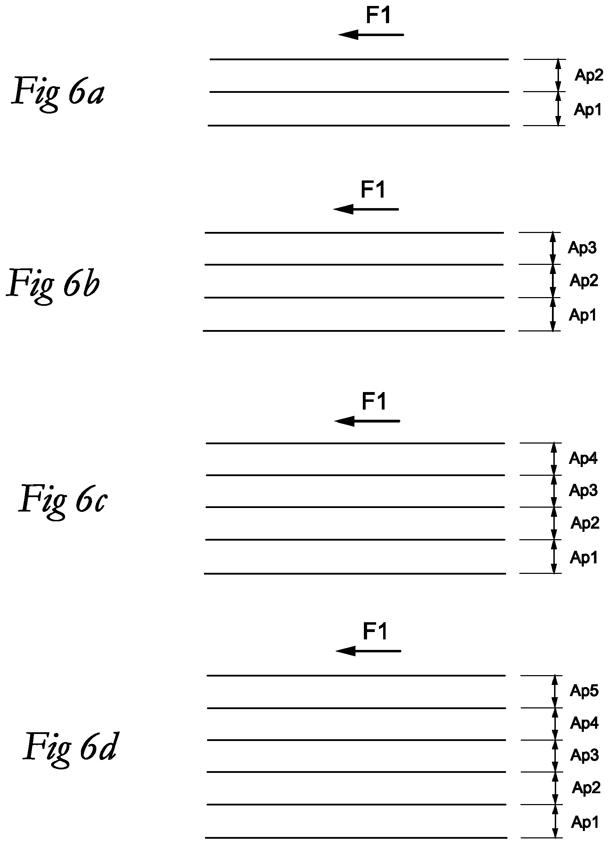

As illustrated in Figure 1b, the first cutting insert 41 and the cutting insert 51 are in active cut when machining the workpiece 20 in the first feed direction F1. The first cutting insert 41 is achieving a first cutting depth Ap1 and the cutting insert 51 is achieving a second cutting depth Ap2. This example is illustrated in Figure 6a.

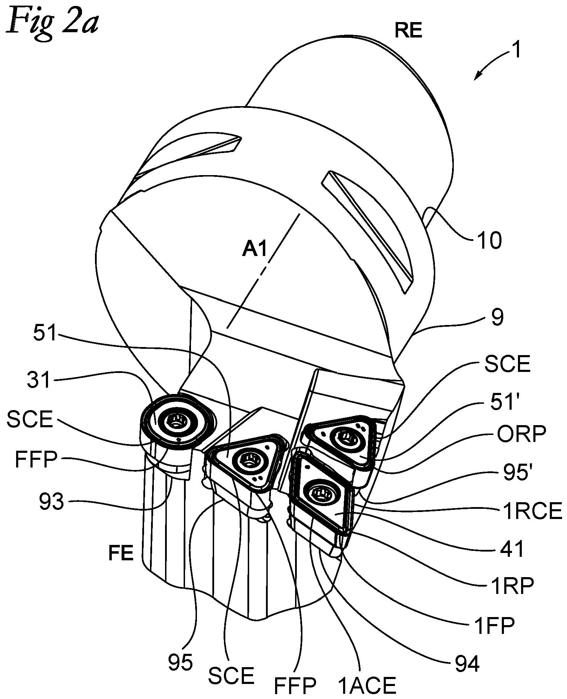

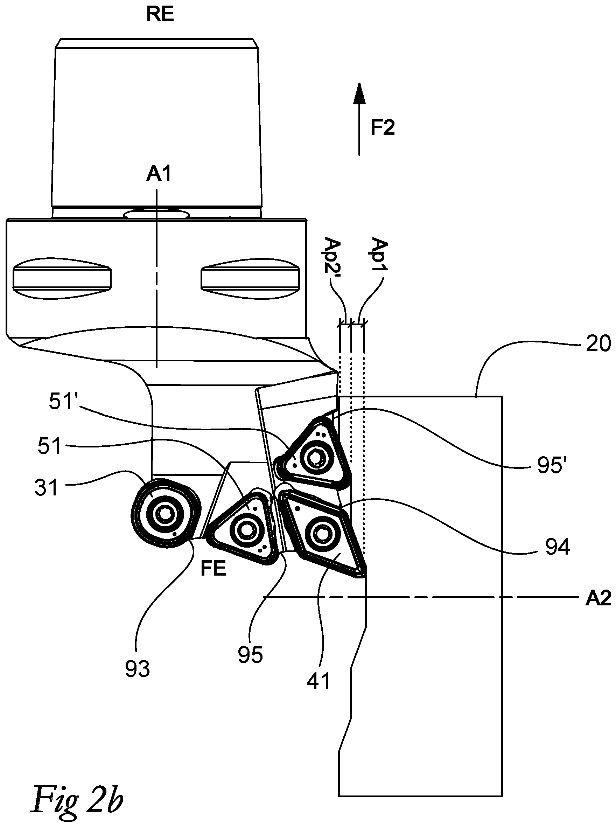

Figure 2a and 2b schematically illustrate a turning tool 1 according to an example.

According to this example the turning tool 1 has the corresponding set of inserts as disclosed with reference to Figures 1a and 1b. The description related to Figure 1a and 1b is in general applicable to the turning tool 1 disclosed in Figure 2a and 2b.

However, in addition to the turning tool 1 of Figures 1a and 1b, a cutting insert 51', which in this case is identical to the cutting insert 51, is arranged in an insert seat 95'.

The cutting insert 51' is positioned beside the first cutting insert 41 such that the side cutting edge SCE of the cutting insert 51' forms a continuation of the first radial cutting edge 1RCE of the first cutting insert 41.

The outward radial point ORP of the cutting insert 51'is located radially inward of the first radial point 1RP and radially outward of a radial rear end of the first radial cutting edge 1RCE.

The side cutting edge SCE of the cutting insert 51' is a second radial cutting edge with a main extension in an axial direction.

According to this example two cutting inserts are arranged to be in cut simultaneously during machining in a radial direction of the metal workpiece 20. This feed direction is referred to as F2. However, depending on the chosen application only the first cutting insert 41 may be in active cut in the feed direction F2.

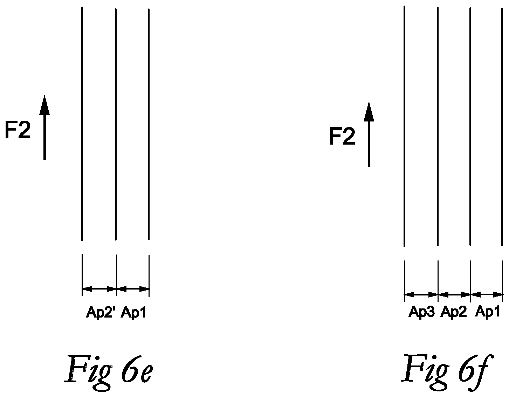

As illustrated in Figure 2b, the first cutting insert 41 and the cutting insert 51' are in active cut when machining the workpiece in the second feed direction F2. The first cutting insert 41 is achieving a first cutting depth Ap1 and the cutting insert 51' is achieving a second cutting depth Ap2'. This example is illustrated in Figure 6e.

Advantageously the tool depicted in Figure 2a and 2b is also working in the first feed direction F1 as discussed with reference to Figure 1a and 1b. Hereby a versatile turning tool 1 is provided.

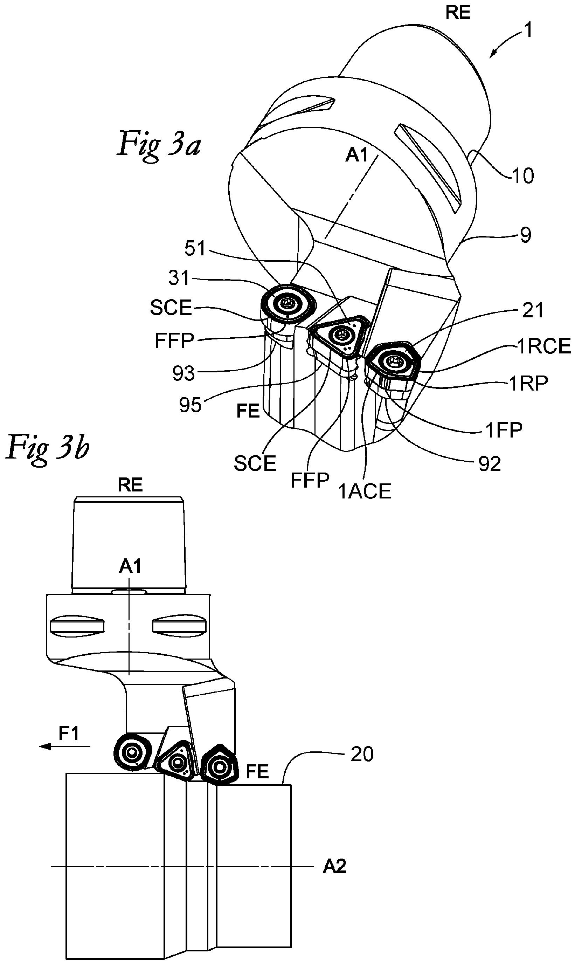

Figure 3a and 3b schematically illustrate a turning tool 1 according to an example.

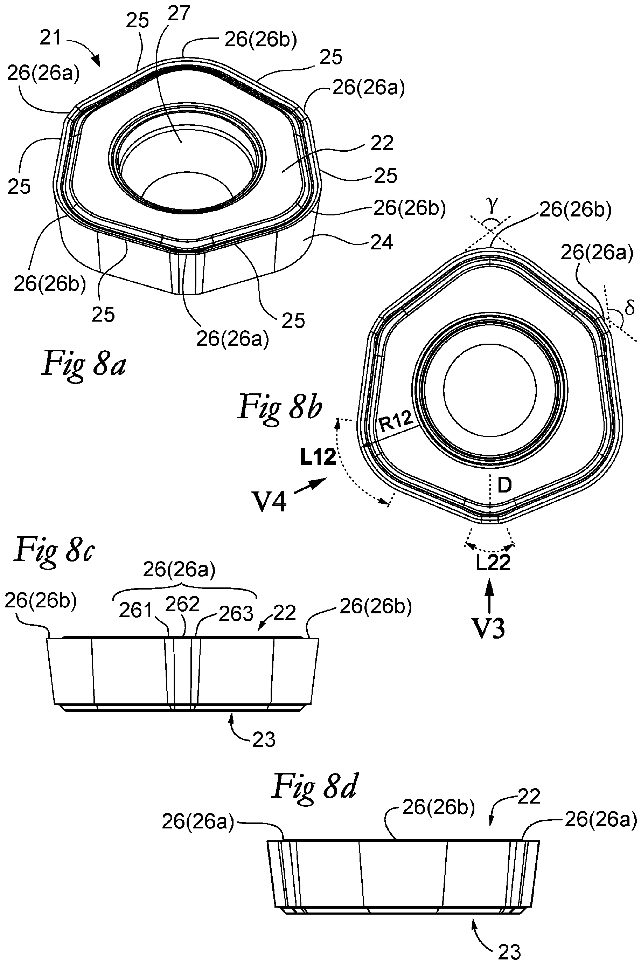

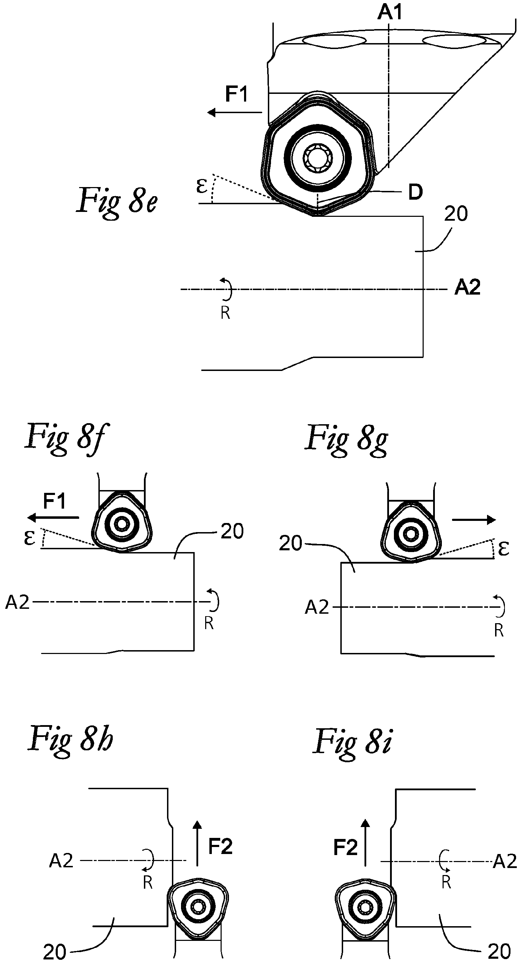

The turning tool 1 comprises a first insert seat 92 for holding a first cutting insert 21. Basically the first insert seat 94 in Figures 1a and 1b has been replaced by the first insert seat 92. Basically the first cutting insert 41 of Figures 1a and 1b has been replaced with the first cutting insert 21. The first cutting insert 21 is depicted in greater detail with reference to Figure 8. The turning tool 1 comprises the insert seat 95 for holding the cutting insert 51. The cutting insert 51 is depicted in greater detail with reference to Figure 11. The turning tool 1 comprises the insert seat 93 for holding the cutting insert 31. The cutting insert 31 is depicted in greater detail with reference to Figure 9. The cutting insert 51 is positioned between the cutting insert 31 and the first cutting insert 21. The cutting inserts of the turning tool 1 according to this example are arranged to be simultaneously in cut in the first feed direction F1.

Each of the cutting inserts of the turning tool 1 comprises a cutting edge, which cutting edge comprises an axially most forward front point, a radially most outward radial point, and a side cutting edge.

The first cutting insert 21 comprises two of the side cutting edges in form of a first axial cutting edge 1ACE and a first radial cutting edge 1RCE. The front point thereof is a first front point 1FP located axially most forward of all points on all cutting edges of the tool 1. The radial point thereof is a first radial point 1RP located radially most outward of all points on all cutting edges of the tool 1. According to this example the first forward point 1FP and the first radial point 1RP are positioned separately in the radial direction.

The first axial cutting edge 1ACE has a main extension in the radially inward direction from a position radially inward of the first front point 1FP.

The first radial cutting edge 1RCE has a main extension in an axially rearward direction from a position axially rearward of the first radial point 1RP. The first radial cutting edge 1RCE is arranged to be in active cut in a second feed direction F2.

According to this example the first radial cutting edge 1RCE is separated by a cutting edge extending from first front point 1FP to the first radial point 1RP. According to one example the edge extending from first front point 1FP to the first radial point 1RP is not a cutting edge.

The cutting insert 51 is positioned beside the first cutting insert 21 such that the side cutting edge SCE of the cutting insert 51 forms a continuation of one side cutting edge of the first cutting insert 21, namely the first axial cutting edge 1ACE.

Hereby the front point FFP of the cutting insert 51 is located axially rearward of the first front point 1FP and axially forward of an axial rear end of the first axial cutting edge 1ACE. Hereby the side cutting edge SCE is a second axial cutting edge with a main extension in a radial direction.

The cutting insert 31 is positioned such that the side cutting edge SCE thereof forms a continuation of side cutting edge SCE of the cutting insert 51. Hereby the front point FFP of the cutting insert 31 is located axially rearward of the front point FFP of the cutting insert 51 and axially forward of an axial rear end of the side cutting edge SCE of the cutting insert 51. Hereby the side cutting edge SCE is a third axial cutting edge with a main extension in a radial direction.

According to this example three cutting inserts are arranged to be in cut simultaneously during machining of the metal workpiece 20. However, depending on the chosen application one, two or all three cutting inserts may be in active cut simultaneously.

As illustrated in Figure 3b, the first cutting insert 21 and the cutting insert 51 are in active cut when machining the workpiece 20 in the first feed direction F1. The first cutting insert 21 is achieving a first cutting depth Ap1 and the cutting insert 51 is achieving a second cutting depth Ap2. This example is illustrated in Figure 6a.

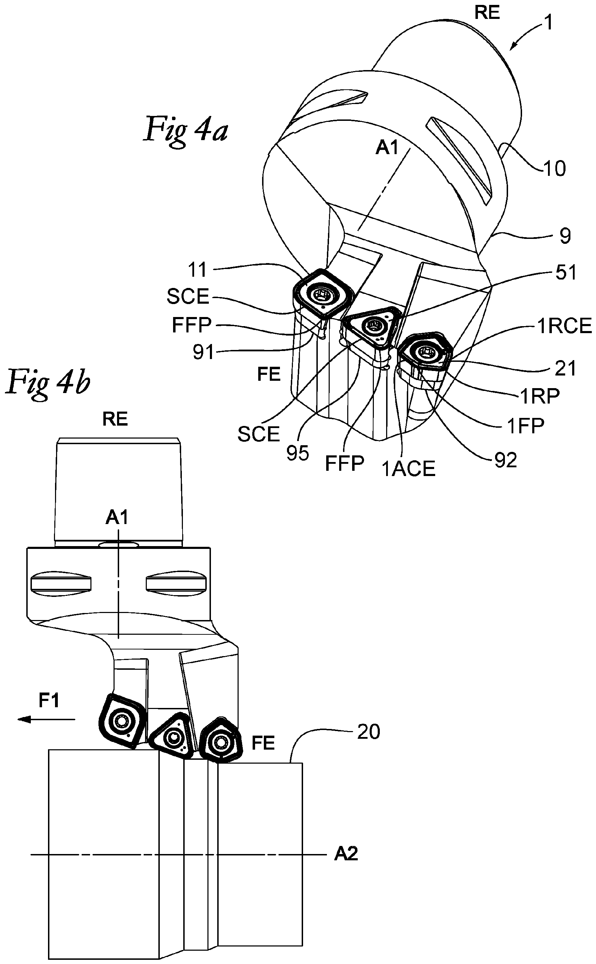

Figure 4a and 4b schematically illustrate a turning tool according to an example.

The turning tool 1 comprises the first insert seat 92 for holding the first cutting insert 21. The first cutting insert 21 is depicted in greater detail with reference to Figure 8. The turning tool 1 comprises the insert seat 95 for holding the cutting insert 51. The cutting insert 51 is depicted in greater detail with reference to Figure 11. The turning tool 1 comprises the insert seat 91 for holding the cutting insert 11. The cutting insert 11 is depicted in greater detail with reference to Figure 7. The cutting insert 51 is positioned between the cutting insert 11 and the first cutting insert 21. The cutting inserts of the turning tool according to this example are arranged to be simultaneously in cut in the first feed direction F1.

Each of the cutting inserts of the cutting tool 1 comprises a cutting edge, which cutting edge comprises an axially most forward front point, a radially most outward radial point, and a side cutting edge.

The first cutting insert 21 comprises two of the side cutting edges in form of a first axial cutting edge 1ACE and a first radial cutting edge 1RCE. The front point thereof is a first front point 1FP located axially most forward of all points on all cutting edges of the tool 1. The radial point thereof is a first radial point 1RP located radially most outward of all points on all cutting edges of the tool 1. According to this example the first forward point 1FP and the first radial point 1RP are positioned separately in the radial direction.

The first axial cutting edge 1ACE has a main extension in the radially inward direction from a position radially inward of the first front point 1FP.

The first radial cutting edge 1RCE has a main extension in an axially rearward direction from a position axially rearward of the first radial point 1RP. The first radial cutting edge 1RCE is arranged to be in active cut in a second feed direction F2.

According to this example the first radial cutting edge 1RCE is separated by a cutting edge extending from the first front point 1FP and the first radial point 1RP. According to one example the edge extending from first front point 1FP to the first radial point 1RP is not a cutting edge.

The cutting insert 51 is positioned beside the first cutting insert 21 such that the side cutting edge SCE of the cutting insert 51 forms a continuation of one side cutting edge of the first cutting insert 21, namely the first axial cutting edge 1ACE.

Hereby the front point FFP of the cutting insert 51 is located axially rearward of the first front point 1FP and axially forward of an axial rear end of the first axial cutting edge 1ACE. Hereby the side cutting edge is a second axial cutting edge with a main extension in a radial direction.

The cutting insert 11 is positioned such that the side cutting edge SCE thereof forms a continuation of side cutting edge SCE of the cutting insert 51. Hereby the front point FFP of the cutting insert 11 is located axially rearward of the front point FFP of the cutting insert 51 and axially forward of an axial rear end of the side cutting edge SCE of the cutting insert 51. Hereby the side cutting edge SCE is a third axial cutting edge with a main extension in a radial direction.

According to this example three cutting inserts are arranged to be in cut simultaneously during machining of the metal workpiece 20. However, depending on the chosen application one, two or all three cutting inserts may be in active cut simultaneously.

As illustrated in Figure 4b, the first cutting insert 11 and the cutting insert 51 are in active cut when machining the workpiece 20 in the first feed direction F1. The first cutting insert 11 is achieving a first cutting depth Ap1 and the cutting insert 51 is achieving a second cutting depth Ap2. This example is illustrated in Figure 6a.

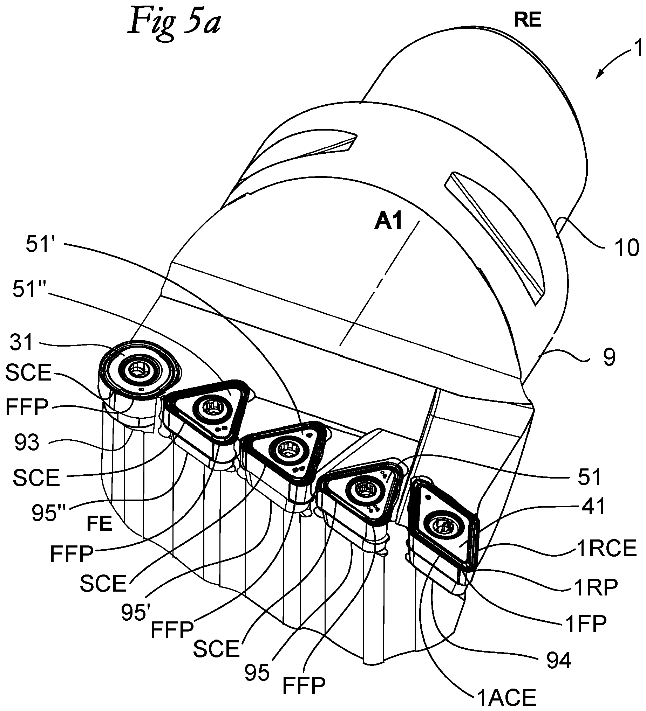

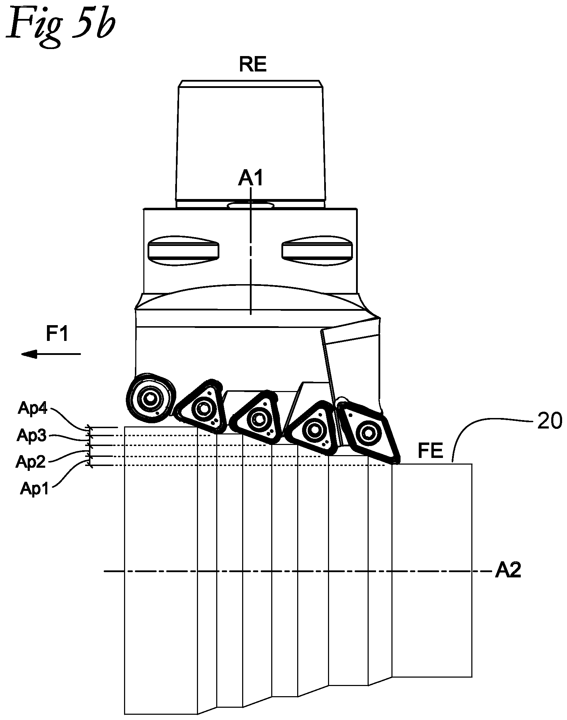

Figures 5a and 5b schematically illustrate a turning tool 1 according to an example.

This example is similar to the example depicted with reference to Figures 1a and 1b. According to this example there are three intermediate cutting inserts arranged between the first cutting insert 41 and the cutting insert 31. The three intermediate cutting inserts are denoted 51, 51' and 51". The set of five cutting inserts is arranged in the turning tool 1 according to the principle depicted herein, namely that side cutting edges of the cutting inserts (except from the first cutting insert 41) form a continuation of the side cutting edge of an adjacent cutting insert, as shown in e.g. Figure 5b. The cutting inserts 51, 51' and 51" are arranged in insert seats 95, 95' and 95", respectively.

As illustrated in Figure 5b, the first cutting insert 41 and the three intermediate cutting inserts 51, 51' 51" are in active cut when machining the workpiece 20 in the first feed direction F1. The cutting inserts in active cut achieve a respective cutting depth Ap1, Ap2, Ap3 and Ap4. This is illustrated in Figure 6c. Figure 6d illustrates cutting depths Ap1-Ap5 representing a machining operation wherein all five cutting inserts 41, 51, 51', 51" and 31 are in cut.

Figures 6a-6f schematically illustrate cutting depths for different cutting insert configurations during machining by the turning tool 1. In Figure 6a-6f each cutting depth APN, where N is a positive integer, corresponds to one cutting insert of the turning tool 1. The cutting depth Ap1 corresponds to the first cutting insert, wherein the front point thereof is a first front point located axially most forward of all points on all cutting edges of the turning tool 1, and wherein the radial point thereof is a first radial point located radially most outward of all points on all cutting edges of the tool.

Even though the different cutting depths herein are indicated as being equally big the cutting depths of the different cutting inserts in cut may be mutually different.

Figure 6a illustrates a first cutting depth Ap1 and a second cutting depth Ap2. Hereby two cutting inserts are in active cut of the metal workpiece 20. This is exemplified with reference to e.g. Figure 1b. Cutting is performed in the first feed direction F1.

Figure 6b illustrates a first cutting depth Ap1, a second cutting depth Ap2 and a third cutting depth Ap3. Hereby three cutting inserts are in active cut of the metal workpiece 20. Cutting is performed in the first feed direction F1.

Figure 6c illustrates a first cutting depth Ap1, a second cutting depth Ap2, a third cutting depth Ap3 and a fourth cutting depth Ap4. Hereby four cutting inserts are in active cut of the metal workpiece 20. This is exemplified with reference to Figure 5b Cutting is performed in the first feed direction F1.

Figure 6d illustrates a first cutting depth Ap1, a second cutting depth Ap2, a third cutting depth Ap3, a fourth cutting depth Ap4 and a fifth cutting depth Ap5. Hereby five cutting inserts are in active cut of the metal workpiece 20. This is can be performed by the turning tool 1 depicted with reference to Figure 5a. Cutting is performed in the first feed direction F1.

Figure 6e illustrates a first cutting depth Ap1 and a second cutting depth Ap2'. Hereby two cutting inserts are in active cut of the metal workpiece 20. This is exemplified with reference to e.g. Figure 2b. Cutting is performed in the second feed direction F2.

Figure 6f illustrates a first cutting depth Ap1, a second cutting depth Ap2 and a third cutting depth Ap3. Hereby three cutting inserts are in active cut of the metal workpiece 20. Cutting is performed in the second feed direction F2.

Figure 7a-7d illustrate a cutting insert 11 comprising a first surface 12 and a second surface 13, wherein the first and second surfaces 12, 13 are arranged opposite each other and facing opposite directions. A peripheral surface 14 connects the first surface 12 and the second surface 13. An edge is formed by an intersection between the first surface 12 and the peripheral surface 14. The edge includes four side edges 15 connected via four corner edges 16 arranged pairwise opposite each other.

Hence, the corner edges 16 includes a first pair 161 of corner edges and a second pair 162. When seen in a plan view of the first surface 12, as shown in Fig. 7b, each corner edge is formed by a curvilinear segment, in this case a single circular segment, wherein the circular segment of each of the corner edges of the first pair 161 has a first radius of curvature R11 that in the illustrated embodiment is about six times greater than a second radius of curvature R21 of the circular segment of each of the corner edges of the second pair 162. The side edges 15 are rectilinear. Each corner edge of the first pair 161 of the corner edges has a first length of extension L11 that in the illustrated embodiment is about six times greater than a second length of extension L21 of each of the corner edges of the second pair of corner edges. In this case the first length of extension L11 corresponds to nearly 20% of the total length of the edge.

Two side edges 15 connected by a corner edge of the first pair 161 forms an internal angle α with respect to each other, whereas two side edges 15 connected by a corner edge of the second pair 162 forms an internal angle β with respect to each other. In the illustrated embodiment, the angle α is equal to the angle β, i.e., they are both 90°.

A hole 17 extends through the cutting insert 11 and is used for mounting the cutting insert in an insert seat of a turning tool body, for example using a screw.

As best seen in Figs. 7c and 7d, the cutting insert 11 is of the positive type. Hence, the cutting insert is single sided, with no cutting edges on the intersection between the second surface 13 and the peripheral surface 14.

The cutting insert 11 is indexable and can be placed in an insert seat of a turning tool body in a number of different positions as will be described in more detail below.

Figs. 7e-7h illustrate a turning tool comprising a turning tool body 10 and the cutting insert 11 shown in Figs. 7a-7d. The turning tool body 10 has a front end FE and an opposite rear end RE and a main extension along a longitudinal axis A1 extending from the front end FE to the rear end RE. An insert seat 91 is formed in the front end FE. In this case, the insert seat includes a shim on which the second surface 13 of the cutting insert 11 rests. The cutting insert 11 is fixed within the insert seat 91 using a screw extending through the hole 17 in the cutting insert 11 and into a threaded hole (not shown) in the insert seat 91. When the cutting insert 11 is mounted in the insert seat 91, one of the corner edges of the second pair 162 is arranged as a front corner edge that is located in front of the other corner edges. The cutting insert 11 is indexable and may thus be relocated within the insert seat by being rotated 180° and then fixed again using the screw, such that the other corner edge of the second pair 162 is arranged as front corner edge.

The insert seat 91 is arranged in the tool body 10 such that a bisector B (illustrated in Fig. 7e) of the front corner edge is parallel to the longitudinal axis A1 of the turning tool 1, when seen in a plan view of the first surface 12 of the cutting insert 11. As a consequence, no particular feed direction is favored. Fig. 7e illustrates how the turning tool 1 can be used for longitudinal turning in a feed direction F1 of a workpiece 20 that rotates around an axis A2 in a rotation direction R. Moreover, with the cutting insert 11 arranged in this way, the turning tool 1 may also be used for facing operations in a feed direction F2, towards the workpiece axis A2, as illustrated in Figs. 7g-7h.

According to other embodiments, the cutting insert 11 is not arranged symmetrically with respect to the tool body but the insert seat 91 is instead arranged such that the bisector B1 of the front corner edge of the cutting insert 11 extends in a transverse direction, i.e., non-parallel, to the longitudinal axis A1 of the turning tool 1. Such orientation is illustrated in Figs. 7i-7j (although the tool body is not shown in the figures). Fig. 7i schematically illustrates a longitudinal turning operation, and Fig. 7j a facing operation, of a workpiece 20. Such arrangement of the cutting insert 11 may be beneficial for certain applications, for example where specific entering angles are desired (e.g., the angle κ shown in Fig. 7i). However, in such embodiment, the turning tool 1 will be specifically adapted for certain cutting directions, indicated by arrows in Figs. 7i-7j.

Figs. 7k-7l illustrate another embodiment of a turning tool comprising the cutting insert 11 mounted in a turning tool body 10. The insert seat 91 of the tool body 10 is configured such that one of the corner edges of the first pair 161 is arranged as front corner edge when the cutting insert 11 is mounted in the insert seat 91, and wherein a bisector B2 of the front corner edge is parallel to the longitudinal axis A1 of the tool body 10 when seen in a plan view of the first surface 12 of the cutting insert 11. The cutting insert 11 is indexable and may thus be relocated within the insert seat 91 by being rotated 180°, such that the other corner edge of the first pair 161 is arranged as front corner edge.

Figures 8a-8d illustrate a cutting insert 21 comprising a first surface 22 and a second surface 23, wherein the first and second surfaces 22, 23 are arranged opposite each other and facing opposite directions. A peripheral surface 24 connects the first surface 22 and the second surface 23. An edge is formed by an intersection between the first surface 22 and the peripheral surface 24. The edge includes six side edges 25 connected via six corner edges 26 arranged pairwise opposite each other. Each pair consists of a minor corner edge 26a and a major corner edge 26b. Accordingly, there are three minor corner edges 26a and three major corner edges 26b alternately arranged along the edge. When seen in a plan view of the first surface 22, as shown in Fig. 8b, each corner edge is formed by curvilinear segments. Each major corner edge 26b is formed by a single circular segment having a first radius of curvature R12. Each minor corner edge 26a is formed by three curvilinear segments 261, 262, 263. The outer curvilinear segments 261, 263 that are connected to respective side edges 25 on either side of the minor corner edge 26a have a quite small radius of curvature, less than half of the first radius of curvature R12. The intermediary curvilinear segment 262, on the other hand, has a large radius of curvature, about two times greater than the first radius of curvature R12. The intermediary curvilinear segment 262 thereby forms a wiper segment.

The side edges 25 are rectilinear. Each major corner edge 26b has a first length of extension L12 that in the illustrated embodiment is about three times greater than a second length of extension L22 of each of the minor corner edges 26a. In this case the first length of extension L12 corresponds to about 10% of the total length of the edge.

Two side edges 25 connected by a major corner edge 26b forms a first internal angle γ with respect to each other, whereas two side edges 25 connected by a minor corner edge 26a forms a second internal angle δ with respect to each other. In the illustrated embodiment, the first internal angle γ is 105° and the second internal angle δ is 135°.

A hole 27 extends through the cutting insert 21 and is used for mounting the cutting insert in an insert seat 92 of a turning tool body 10, for example using a screw.

As best seen in Figs. 8c and 8d, the cutting insert 21 is of the positive type. Hence, the cutting insert is single sided, with no cutting edges on the intersection between the second surface 23 and the peripheral surface 24.

The cutting insert 21 is indexable and can be placed in an insert seat of a turning tool body in three different positions.

Figs. 8e illustrates a turning tool comprising a turning tool body and the cutting insert 21 shown in Figs. 8a-8d.

The cutting insert 21 is fixed within the insert seat using a screw extending through the hole 27 in the cutting insert 21 and into a threaded hole (not shown) in the insert seat 92. When the cutting insert 21 is mounted in the insert seat, one of the minor corner edges 26a is arranged as a front corner edge that is located in front of the other corner edges. The cutting insert 21 is indexable and may thus be relocated within the insert seat by being rotated 120° and then fixed again using the screw, such that one of the other minor corner edges 26a is arranged as front corner edge.

Fig. 8e illustrates the turning tool in a longitudinal turning operation when machining a workpiece 20 that rotates around a rotation axis A2 in a rotation direction R. The resulting entering angle ε is in this case 22.5°.

The insert seat is arranged in the tool body 10 such that a bisector D (illustrated in Fig. 8b) of the front corner edge is parallel to the longitudinal axis A1 of the tool body 10, when seen in a plan view of the first surface 22 of the cutting insert 21. As a consequence, the turning tool 1 can be used for machining in two opposite feed directions. However, the insert seat 92 has an eccentric location in the tool body 30, i.e., wherein the bisector D does not coincide with the longitudinal axis A1, and thereby provides an additional support surface for the cutting insert 21 extending in a direction such that a feed direction as shown by an arrow in Fig. 8e is particularly suitable.

Fig. 8f illustrates the turning tool during a longitudinal turning operation along the feed direction F1 when machining a workpiece 20 that rotates around a rotation axis A2 in a rotation direction R. With the cutting insert 21, the resulting entering angle ε is 15°.

Due to the symmetric arrangement of the cutting insert 21 in the tool body 10, the turning tool 1 is equally well suited for machining in a feed direction opposite to F1, as illustrated in Fig. 8g. Moreover, with the cutting insert 21 arranged in this way, the turning tool 1 may also be used for facing operations in a feed direction F2, from the workpiece axis A2, using any of the major corner edges adjacent the front corner edge, as illustrated in Figs. 8h-8i.

Figures 9a-9d illustrates a cutting insert 31 comprising a first surface 32 and a second surface 33, wherein the first and second surfaces 32, 33 are arranged opposite each other and facing opposite directions. A peripheral surface 34 connects the first surface 32 and the second surface 33. A central axis C of the cutting insert 31 extends from the first surface 32 to the second surface 33. An edge is formed by an intersection between the first surface 32 and the peripheral surface 34. When seen in a plan view of the first surface 32, as shown in Fig. 9b, the edge includes a plurality of circular segments 35, each having a radius of curvature r. The edge further includes a corresponding number of intermediary segments 36 interposed between the circular segments 35. In the illustrated embodiment, the edge includes four circular segments 35 and four intermediary segments 36. As illustrated in Fig. 9b, each circular segment 35 has a first length of extension L13, and each intermediary segment 36 has a second length of extension L23. The first length of extension L13 is greater than the second length of extension L23. In the illustrated embodiment, the first length of extension L13 is about eight times greater than the second length of extension L23. According to other embodiments the difference between the first and second lengths of extension could be greater or smaller. If the first length of extension L13 is at least two times greater than the second length of extension L23, the cutting insert will have a somewhat round-like appearance and may be used in a similar way as a conventional round cutting insert.

The edge is located at a radial distance from the central axis C that varies along the extension of the edge. The edge is located at a maximum radial distance Rmax from the central axis C at points q located halfway along each circular segment 35. The radius of curvature r of each circular segment 35 is smaller than the maximum radial distance Rmax from the central axis C to the edge.

The first surface 32 includes a rake face 38 extending along the full length of the edge, i.e., along all the circular segments 35 and the intermediary segments 36. Accordingly, the whole edge may be considered as a cutting edge and may be used for cutting a workpiece, depending on the orientation of the cutting insert with respect to the workpiece.

Each of the intermediary segments 36 are rectilinear. As seen in fig. 9b, each intermediary segment 36 extends, in relation to a circular segment 35 connected therewith, along a tangent t to the circular segment 35 at a point p where the circular segment transitions into the intermediary segment. Thereby, the transition between the circular segment and the intermediary segment is completely smooth.

With such design, a combination of all circular segments 35 (i.e., in the absence of the intermediary segments 36) would result in a full circle with the radius r.

As seen in Figs. 9c-9d, the edge formed by the circular segments 35 and the intermediate segments 36, when seen in a side view, extends in a direction perpendicular to the central axis C.

According to the illustrated embodiment, the peripheral surface 34 extends between the first and second surfaces 31, 32 in a direction that is parallel with the central axis C, meaning that the cutting insert 31 has a negative basic shape. The second surface therefore has a similar geometry as the first surface, and cutting edges are formed also at the intersection between the second surface and the peripheral surface. Accordingly, the cutting insert 31 can be used in eight different positions (four positions for each of the first and the second surfaces) within an insert seat of a turning tool.

The tool body 10 comprises an insert seat 93 comprising a bottom surface with a threaded hole for receiving a screw used for mounting the cutting insert 31 in the insert seat 93. The insert seat 93 further comprises a peripheral support surface arranged to abut and support portions of the peripheral surface 34 of the cutting insert 31.

Fig. 9e illustrates parts of a turning tool that comprises the tool body 10 and the cutting insert 31 mounted in the insert seat 93 for machining a workpiece 20. The workpiece 20 is rotating around its longitudinal axis A2 in a rotation direction R while the turning tool 1 is moved in the feed direction F1.

In the illustrated embodiment, the cutting depth is rather large, such that not only one of the active circular segments 35 is engaged in cutting but also a part of the intermediate segment 36 connected to the circular segment 35. Since the transition between the circular segment 35 and the intermediate segment 36 does not involve any sharp corners, the transition is sufficiently strong for withstanding the high cutting forces caused by the large cutting depth and the transition is not particularly susceptible to wear. Moreover, the chip formation will be beneficial. With this geometry, it would be possible to use an even greater cutting depth than what is shown in Fig. 9e, wherein a part of the next circular segment following the intermediary segment is also engaged in cutting.

The peripheral support surface of the insert seat will mitigate the risk for dislocation, in particular rotation, of the cutting insert 31 within the insert seat 93. By having a peripheral support surface in the insert seat with a geometry that is complementary to (matches) the non-circular profile of the peripheral surface 34 of the cutting insert 31, the cutting insert 31 is efficiently prevented from rotating within the insert seat 93. In the illustrated embodiment, the peripheral support surface is formed by flat surface portions supporting parts of the peripheral surface 34 bordering intermediary segments 36 on the cutting insert 31. In other words, the peripheral support surface is formed by two flat portions supporting corresponding flat portions on the peripheral surface 34 of the cutting insert 31.

Figure 10a-d schematically illustrates a fourth example of a cutting insert 41. The cutting insert 41 may be referred to as a diamond cutting insert.

The cutting insert 41 comprising a first surface 42 and a second surface 43, wherein the first and second surfaces 42, 43 are arranged opposite each other and facing opposite directions. A peripheral surface 44 connects the first surface 42 and the second surface 43. An edge is formed by an intersection between the first surface 42 and the peripheral surface 44. The edge includes four side edges 45 connected via four corner edges 46 arranged pairwise opposite each other. Hence, the corner edges 46 includes a first pair 461 of corner edges and a second pair 462. When seen in a plan view of the first surface 42, as shown in Fig. 10b, each corner edge is formed by a curvilinear segment. The side edges 45 are rectilinear.

Two side edges 45 connected by a corner edge of the first pair 461 forms an internal angle φ1 with respect to each other, whereas two side edges 45 connected by a corner edge of the second pair 462 forms an internal angle φ2 with respect to each other. In the illustrated embodiment, the angle φ1 is smaller the angle φ2. The cutting insert 41 has a rhombic shape as seen in a top view.

A hole 47 extends through the cutting insert 41 and is used for mounting the cutting insert in an insert seat 94 of the turning tool body 10, for example using a screw.

As best seen in Figs. 10c and 10d, the cutting insert 41 is of the positive type. Hence, the cutting insert is single sided, with no cutting edges on the intersection between the second surface 43 and the peripheral surface 44.

The cutting insert 41 is indexable and can be placed in an insert seat of a turning tool body 10 in a number of different positions.

Figure 11a-d schematically illustrates a fifth example of a cutting insert 51. The cutting insert 51 may be referred to as a triangular cutting insert.

The cutting insert 51 comprising a first surface 52 and a second surface 53, wherein the first and second surfaces 52, 53 are arranged opposite each other and facing opposite directions. A peripheral surface 54 connects the first surface 52 and the second surface 53. An edge is formed by an intersection between the first surface 52 and the peripheral surface 54. The edge includes three side edges 55 connected via three corner edges 56. The cutting insert is symmetrical. Each corner edge is formed by a curvilinear segment.

A hole 57 extends through the cutting insert 51 and is used for mounting the cutting insert in an insert seat 95, 95', 95" of a turning tool body 10, for example using a screw.

As best seen in Figs. 11c and 11d, the cutting insert 51 is of the negative type. Hence, the cutting insert is double sided, with cutting edges on the intersection between the second surface 53 and the peripheral surface 54.

The cutting insert 51 is indexable and can be placed in the insert seat 95 of
the turning tool body 10 in a number of different positions.

In the present application, the use of terms such as "including" is open-ended and is intended to have the same meaning as terms such as "comprising" and not preclude the presence of other structure, material, or acts. Similarly, though the use of terms such as "can" or "may" is intended to be open-ended and to reflect that structure, material, or acts are not necessary, the failure to use such terms is not intended to reflect that structure, material, or acts are essential. To the extent that structure, material, or acts are presently considered to be essential, they are identified as such. Terms such as "upper", "lower", "top", "bottom", "forward", "front", "rearward" and "rear" refer to features as shown in the current drawings and as perceived by the skilled person.

## Claims

1. A turning tool (1) comprising
a tool body (10), which
- extends rearward from a front end (FE) to a rear end (RE) along a longitudinal central axis (A1), which defines an axial direction and a radial direction,
- is provided with a plurality of insert seats (91, 92, 93, 94, 95) and
a plurality of cutting inserts (11, 21, 31, 41, 51), which
- each are arranged in one respective insert seat,
- each comprise a cutting edge, which cutting edge comprises
∘ an axially most forward front point (FFP),
∘ a radially most outward radial point (ORP), and
∘ a side cutting edge (SCE),
wherein the plurality of cutting inserts comprises:
a first cutting insert, which comprises two of the side cutting edges in form of a first axial cutting edge (1ACE) and a first radial cutting edge (1RCE), wherein,
∘ the front point thereof is a first front point (1FP) located axially most forward of all points on all cutting edges of the tool;
∘ the radial point thereof is a first radial point (1RP) located radially most outward of all points on all cutting edges of the tool;
∘ wherein
▪ the first axial cutting edge (1ACE) has a main extension in the radially inward direction from a position radially inward of the front point, and
▪ the first radial cutting edge (1RCE) has a main extension in an axially rearward direction from a position axially rearward of the radial point,
a second cutting insert,
**characterized in that**
the second cutting insert is positioned beside the first cutting insert such that the side cutting edge (SCE) of the second cutting insert forms a continuation of one of the two side cutting edges of the first cutting insert, wherein
- when the second cutting insert is positioned such that the side cutting edge (SCE) forms a continuation of the first axial cutting edge (1ACE),
∘ the front point (FFP) of the second cutting insert is located axially rearward of the first front point and axially forward of an axial rear end of the first axial cutting edge,
∘ the side cutting edge is a second axial cutting edge with a main extension in a radial direction,
- when the second cutting insert is positioned such that the side cutting edge (SCE) forms a continuation of the first radial cutting edge (1RCE),
∘ the radial point of the second cutting insert is located radially inward of the first radial point and radially outward of a radial rear end of the first radial cutting edge,
∘ the side cutting edge is a second radial cutting edge with a main extension in an axial direction.

2. The turning tool (1) according to claim 1, further comprising two of the second cutting inserts, wherein one is positioned such that the side cutting edge (SCE) forms a continuation of the first axial cutting edge (1ACE), and one is positioned such that the side cutting edge (SCE) forms a continuation of the first radial cutting edge (1RCE).

3. The turning tool (1) according to claim 1, further comprising two of the second cutting inserts, wherein one is positioned such that the side cutting edge (SCE) forms a continuation of the first axial cutting edge (1ACE), and one is positioned such that the side cutting edge (SCE) forms a continuation of that side cutting edge.

4. The turning tool (1) according to claim 1, further comprising three of the second cutting inserts, wherein
one is positioned such that the side cutting edge (SCE) forms a continuation of the first axial cutting edge (1ACE),
one is positioned such that the side cutting edge (SCE) forms a continuation of that side cutting edge (SCE), and
one is positioned such that the side cutting edge (SCE) forms a continuation of the first radial cutting edge (1RCE).

5. The turning tool (1) according to claim 1, further comprising four of the second cutting inserts, wherein
the four cutting inserts are positioned adjacent to the first cutting insert on one side and adjacent to each other such that the side cutting edges (SCE) thereof together form a continuation of the first axial cutting edge (1ACE).

6. The turning tool according to any one of the preceding claims, wherein at least the first cutting insert and the second cutting insert have mutually different profiles.

7. The turning tool according to any one of the preceding claims, wherein the first axial cutting edge (1ACE) is oriented relative the longitudinal central axis (A1) at an angle of 30-80°.

8. The turning tool according to any one of the preceding claims, wherein the first radial cutting edge (1RCE) is oriented relative the longitudinal central axis (A1) at an angle of 10-60°.

9. The turning tool according to any one of the preceding claims, wherein
a distance, as seen in the axial direction, between the first front point (1FP) of the first cutting insert and a front point (FFP) of an adjacent second cutting insert is 2.0-5.0 mm; or
a distance, as seen in the radial direction, between the first radial point (1RP) of the first cutting insert and a radial point (ORP) of an adjacent second cutting insert is 2.0-5.0 mm.

10. The turning tool according to any one of the preceding claims, wherein
the second cutting insert is positioned such that the side cutting edge (SCE) forms a continuation of the first axial cutting edge (1ACE) at a maximum of half the length of the first axial cutting edge (1ACE) measured from the first axial front point (1FP), or
the second cutting insert is positioned such that the side cutting edge (SCE) forms a continuation of the first radial cutting edge (1RCE) at a maximum of half the length of the first radial cutting edge (1RCE) measured from the first radial front point (1RP).
